# EUROPEAN PATENT APPLICATION

(11) **EP 4 592 924 A1**
(43) Date of publication of application: **30.07.2025**
(21) Application number: 24000011.7
(22) Date of filing: 25.01.2024
(51) Int. Cl.: G06Q 10/087, A47B 96/16, F25D 25/02, A47F 3/00, A47F 3/04, F25D 11/00, A47B 45/00, A47B 71/00, A47F 3/06, A47B 57/30

(54) **SMART FOOD STORAGE CABINET**

(71) Applicant: Tomescu, Madalin, 03108 Bucuresti (RO)
(72) Inventor: Tomescu, Madalin, 03108 Bucuresti (RO)

(57) **Abstract**

The present invention relates to a smart food storage cabinet, adapted to real space, connected to Al systems.

The smart cabinet for storing food consists of a rectangular body **(1)** with a frontal access door **(2),** which rests on a post **(3),** inside which the body **(1) is** fitted with a ventilation system **(4)** connected to the outside by a pipe, and inside which, both on the door and in the space inside the body **(1),** vertical rails **(7.1, 7.2)** supporting shelves **(8.1, 8.2) are** fitted**.2)** which can be arranged vertically at different distances from each other, and where a 3D scanner **(5)** is arranged on the outside of the cabinet and a video screen **(6)** with audio equipment is provided on the door **(2),** and the user is provided with all the desired information by means of an Al system **(13)** to which the cabinet is connected, which can be viewed either on the screen **(6)** and/or via a wireless connection, using dedicated software on the mobile phone, information about each food stored in the cabinet being obtained by scanning the respective food with the 3D scanner **(5)** and stored in a database, and for easier access to the food stored on the shelves **(8.1)** inside the body **(1)** the shelves slide outwards from the body **(1)** when the cupboard door **(2)** is opened, by means of sliding arms **(9)** and profiles **(10),** the sliding movement also being made possible by a guide rail **(11)** and rollers **(12).**

## Description

The present invention relates to a smart food storage cabinet adapted to real space, connected to artificial intelligence systems.

For example, when a person browses online to look for a particular food in the cabinet, where that food is stored and kept for a longer period of time, the user might not be able to view it or find out information about it, such as stock, contents, shelf life, nutritional recommendations, uses in different recipes, contraindications, etc. It is usually not clear to the user whether or not that food fits into their lifestyle.

In addition to this basic information, it is essential for the user to consider the size of the space where the food will be stored, or its appearance.

In order to meet these needs, it is necessary that, according to the invention, the cabinet includes AI systems and user interaction.

Configurations of Al systems are disclosed in another aspect of the invention, which can be read by the computer, allowing the user to view the stored food in an image showing the inside of the cabinet.

In some cases, the image of the inside of the cabinet can be captured by a 3D scanner, showing the stored food. These can be removed and the image can be restored by filling the remaining gaps with one or more new foods, that can be inserted into the restored image. The placement of food in the image can be adjusted before the new image is delivered to the user. New foods can be selected and suggested to a user, to replace those unsuitable for their lifestyle or health.

Food storage cabinets are known to provide cooling of stored food, such as the one described in GB 868352**,** where cooling is achieved by airflow provided by a refrigerator.

The document JP 2005131124 shows a cabinet for food and beverage storage, fitted with a multitude of shelves, which provides optimal ventilation inside, providing low humidity inside, as well as air purification.

The document CN 113487804 describes a method for controlling the inner temperature of a food cabinet, which is read and controlled by a computer, providing appropriate information about the storage of different categories of food.

The technical issue that the present invention solves is to store food in a suitable environment, to make it easily accessible, to provide useful information and to control the stored food at all times.

According to the invention, the intelligent food storage cabinet consists in a rectangular body with a frontal access door, a ventilation system connected to the outside by means of a pipe and removable shelves, fitted both on the door and in the space inside the body, which can be positioned in height, by hanging on vertical beams, at different distances from each other or at different heights, the shelves inside the body being able to slide outwards when the cabinet door is opened, their movement being possible by means of horizontal arms sliding in profiles fixed under the shelves on the door or under the shelves inside the rectangular body, the sliding of the shelves inside the cabinet body is made possible by rollers and a guide rail, there is a video screen on the door where information about the food stored can be viewed, and by audio equipment they can also be intercepted by disabled people, the information about each stored food is entered into a database by scanning the food with a 3D scanner placed outside the cabinet, with the help of an Al system which is connected to the cabinet, thusly the user benefitting in all the desired information, which can also be viewed through a wireless connection, with the help of a dedicated software on the mobile phone.

The advantages of the present invention are:
- Keeps food in optimal conditions;
- Easy access to food;
- Provides various information by accessing AI systems;
- Permanent interaction between the cabinet and the software that manages the storage;
- The user is constantly informed about the stored food.

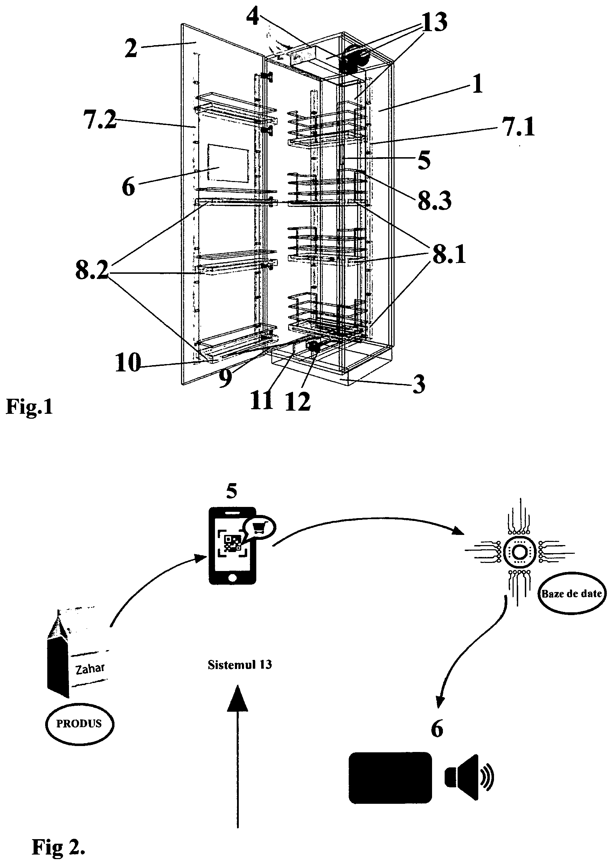

The following is a configuration of the invention in connection with Figures 1 and 2, showing:
Fig 1- perspective view of the cabinet;
Fig 2 - schematic diagram of the AI system;

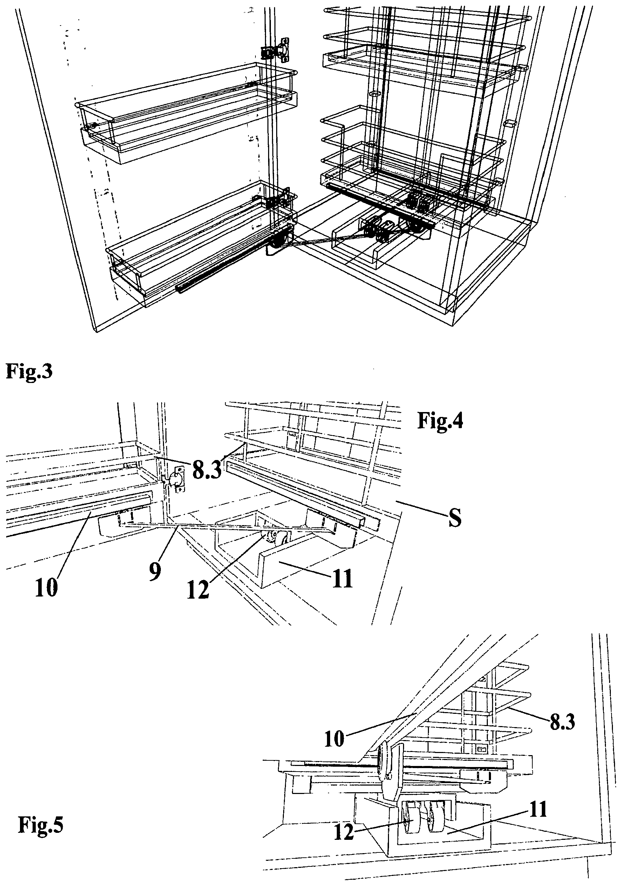

Fig 3 - detail of the shelves guiding and sliding system
Fig 4 - side view of the slide assembly;
Fig 5 - front view of the slide assembly;

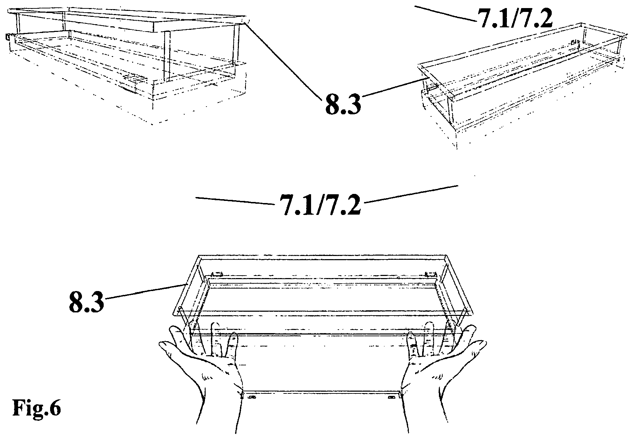

Fig 6- how to attach removable shelves.

Reference will hereinafter be made, in detail, to a possible customization of the invention, the presentation of which is illustrated in the appended drawings.

As shown in FIG.1, the 3D view recreates the smart cabinet, which has a rectangular shape, consists of a body **1** and a door ***2*,** body **1** being supported by a post **3,** where various electronic equipment including the necessary power supply unit are arranged. These are not numbered or shown.

Both body **1** and door **2** have several removable shelves **8.1,** respectively **8.2,** for food storage, according to this example that will be presented.

The interior design of body **1** and door **2** may include reshaping their structure, for example by changing the position of shelves **8.1, 8.2** vertically in relation to each other. The remodeling of the cabinet may additionally include the removal or addition of new shelves.

At the top, the body **1** has a ventilation system **4** mounted on the inside, equipped with related, [not shown] sensors, by means of which the temperature and humidity inside the cabinet are controlled and kept within optimum parameters.

On the lowermost shelf **8.1,** mounted in the body **1** and opposite the ventilation system **4** , are mounted two vertically positioned side rails **7.1** at the rear of the shelf or namely inside the body **1.** The length of the side rails **7.1** is determined by the height of the interior space of the cabinet and according to the user's preference.

Two further rails **7.2** are fixed vertically to door **2.** The rails **7.1** and **7.2** are provided along, their length, with [not shown] hooking elements which allow the shelves **8.1, 8.2** to be mounted at a distance from each other. The distribution of the shelves in height or the distance between them is random, according to the user's preference.

When the cabinet is closed, the shelves **8.1,** together with the rails **7.1** to which they are attached, are positioned at the rear of the body **1,** inside the cabinet.

For the protection of the stored products, the removable shelves **8.1, 8.2** have guards **8.3** arranged at the front and at the side edges, and the upper surface **S** of the shelves is provided with an adherent material, which prevents slipping and/or horizontal movement of the stored products.

According to the invention, a 3D scanner **5** is mounted on the outside of the body **1** of the cabinet. Its purpose is to scan images of the stored products, or of their labels, when they are first placed in the cupboard, or subsequent images when the user wishes to find out more information about the stored product, such as: date of storage, nutritional content, shelf life, recommendations for use, etc.

In some cases, the images captured by the scanner **5** can be viewed directly on an interior screen **6** located on the cabinet door **2** or can be transmitted to other users and to the devices they use. Images captured by the scanner **5** may be stored in a database or transmitted to different locations. Through audio equipment, this information can also be intercepted by people with disabilities.

Part of the shelves **8.2** which are mounted on the door **2** are connected to the shelves **8.1** arranged in the body **1** by means of hinged arms **9** which slide in a profile **10** mounted under the respective shelf. In this way, when door **2** is opened, the arms **9** slide into the profiles **10** mounted under the shelves **8.1** and **8.2** and pull the shelves **8.1** arranged in body **1** towards the outside of the cabinet. When door **2** has a closing movement of the cabinet, the arms **9** slide into the profiles **10** in the opposite direction and the shelves **8.1** in body **1** retract towards the inside of the cabinet.

The sliding movement of the shelves **8.1** inside the body **1** is also provided by an assembly consisting of a guide rail **11** and two rollers **12,** arranged at the bottom of the body **1,** below the lowest shelf **8.1.**

The Smart Cupboard is equipped with an AI system, which can provide suggestions for an optimal interior arrangement of shelves or stored food, based on virtual images for a real interior space, as well as suggestions for modifications or interior rearrangements of shelves or food according to the user's preferences.

In some configurations, the system **13** may include a database for storing data, and optionally a network, to facilitate communication between the various system components and user devices. The user devices may be: a smart phone, a laptop, a tablet, which may include a user interaction interface, such as a touch screen or keyboard.

The optional network can be a local area network (LAN), a wireless network, a cloud computing environment, a zone client (WAN), etc. In some cases, the optional network can be replaced by wired communication systems or devices.

In some cases, the different components of the system may be remote or in different locations.

The system **13** may include a communication interface, which can send or receive data from the ventilation system **4,** and a thermometer via direct communication links, a wireless network, radio waves, Bluetooth or WiFi, or other methods of communication.

System **13** includes a general or special microprocessor, digital signal processor or microcontroller.

Memory can include any appropriate type of storage for any type of information the processor would need. Different types of data can be stored permanently, deleted periodically, or ignored immediately after processing.

The video screen or the the display can be liquid crystal display (LCD), light emitting diode display (LED), plasma display or any other type of display. It can have different physical buttons, to receive different commands from the user, such as: on-off, image zoom, brightness.

## Claims

1. The smart food storage cabinet consisting of a rectangular body **(1)** with frontal access door **(2),** which rests on a post **(3),** the inside of the body **(1)** having a ventilation system **(4)** connected to the outside by a tube, the cabinet having mounted on the inside, both on the door and in the space inside the body **(1)** vertical rails **(7.1, 7.2)** supporting shelves **(8.1, 8.2).2),** which can be arranged vertically at different distances from each other, **while it's main feature is that** a 3D scanner **(5)** is fitted on the outside of the cabinet and a video screen **(6)** with audio equipment is provided on the door **(2),** and the user is provided with all the desired information by means of an Al system **(13)** to which the cabinet is connected, which can be either viewed on the screen **(6)** and/or via a wireless connection, using dedicated software on the mobile phone, information about each food stored in the cabinet being obtained by scanning the respective food with the 3D scanner **(5)** and stored in a database and, for easier access to the food stored on the shelves **(8.1)** inside the body **(1),** they slide outwards when the cupboard door **(2)** is opened by means of sliding arms **(9)** and profiles **(10),** the sliding movement being also possible thanks to a guide rail **(11)** and rollers **(12).**

2. The smart food storage cabinet, according to claim 1, **is characterized by the fact that** the AI system **(13)** includes a communication interface that can send or receive data from the ventilation system **(4)** and a thermometer via direct communication links, a wireless network, radio waves, Bluetooth or WiFi, or other methods of communication.

3. The smart food storage cabinet, according to claims 1 and 2, **is characterized by the fact that** it includes a communication interface, configured to receive an image of a product, captured with the 3D scanner **(5),** and at least one general or special microprocessor, digital signal processor or microcontroller is configured to determine the product data captured by the 3D scanner;

4. The smart food storage cabinet, according to claims 1, 2 and 3, **is characterized by the fact that** two vertically positioned rails **(7.1)** are mounted on the lowermost shelf **(8.1)** mounted in the body **(1)** and opposite the ventilation system **(4)** at the rear of the shelf or the body enclosure **(1) and** two further vertically positioned rails **(7.2)** are mounted on the door **(2).**

5. The smart food storage cabinet, according to claim 4, **is characterized by the fact that** the rails **(7.1)** and **(7.2)** have provided along their length, [not shown], clip fasteners which allow the shelves **(8.1, 8.2)** to be mounted spaced apart.

6. The smart food storage cabinet, according to claims 1 to 4, **is characterized by the fact that** the shelves **(8.1, 8.2)** have guards **(8.3)** arranged at the front and at the side edges and the upper surface **(S)** of the shelves is provided with an adherent material, which prevents the stored products from sliding and/or moving horizontally.

7. The smart food storage cabinet, according to claims 1 to 6 **is characterized by the fact that** the shelves **(8.2)** mounted on the door **(2)** are connected to the shelves **(8.1)** arranged in the body **(1)** by hinged arms **(9)** which slide in a profile **(10)** mounted under the respective shelf so that, when the door **(2)** is opened, the arms **(9)** pull the shelves **(8.1)** arranged in the body **(1),** and when the door **(2)** has a closing movement of the cabinet, the arms **(9)** slide in the profiles **(10)** in the opposite direction and the shelves **(8.1)** in the body **(1)** retract towards the inside of the cabinet.

8. The smart food storage cabinet, according to claims 1 to 7, **is characterized by the fact that** the sliding movement of the shelves **(8.1)** inside the body **(1)** is also provided by an assembly consisting of a guide rail **(11)** and two rollers **(12)** arranged at the bottom of the body **(1),** below the lowest shelf **(8.1).**

## Amended claims

### Amended claims in accordance with Rule 137(2) EPC.

1. Intelligent cupboard for storing food consisting of a body **(1)** of rectangular shape and provided with a frontal access door **(2),** the body resting on a post **(3),** the inside of the body **(1)** having vertical rails **(7.1, 7.2)** supporting shelves **(8.1, 8.2)** which are detachable and slide towards the outside, when the door (2) of the cupboard is opened, and on the outside the body (1) boasts a 3D scanner (5) , a video screen **(6)** also equipped with audio equipment, **characterized in that** by means of an artificial intelligence system **(13)** to which the body (1) of the cupboard is connected, the user receives all the desired information, about the food to be stored inside, or information about the food that is already stored, information that can be visualized both on the screen **(6)** and / or through a wireless connection using a dedicated software on the mobile phone, as well as the location inside or a possible relocation thereof, information that is stored in a database, sliding the shelves **(8.1 )** from the inside of the body **(1 )** to the outside when the door **(2)** of the cupboard is opened, being possible by means of articulated arms **(9)** sliding in some profiles **(10),** the sliding movement being provided by a guide rail **(11)** and some rollers **(12)** arranged at the bottom of the body **(1).**

2. An intelligent food storage cabinet according to claim 1 **characterized in that the** artificial intelligence system **(13)** includes a communication interface that can send or receive data via a wireless network, radio waves, Bluetooth or Wi-Fi, or other communication methods.

3. The intelligent food storage cabinet, according to claims 1 and 2, **characterized in that the** artificial intelligence system **(13)** comprises a communication interface configured to receive an image of a product captured with the 3D scanner **(5)** and at least one general or special microprocessor, digital signal processor or microcontroller is configured to determine information about the product captured by the 3D scanner.
